# EUROPEAN PATENT APPLICATION

(11) **EP 4 737 204 A1**
(43) Date of publication of application: **06.05.2026**
(21) Application number: 24210296.0
(22) Date of filing: 31.10.2024
(51) Int. Cl.: B60N 2/00

(54) **METHOD FOR DETECTING AN INCAPACITATION OF AN OCCUPANT OF A VEHICLE, METHOD FOR CONTROLLING A VEHICLE**

(71) Applicant: Volvo Car Corporation, 405 31 Göteborg (SE)
(72) Inventor: ZELENIKA ZEBA, Mirta, 40531 Göteborg (SE); SVANBERG, Bo, 40531 Göteborg (SE); NILSSON, Emma, 40531 Göteborg (SE); BJÖRKLUND, Magnus, 40531 Göteborg (SE)
(74) Representative: Kransell & Wennborg KB

(57) **Abstract**

The disclosure relates to a method for detecting an incapacitation of an occupant (18) of a vehicle (10). The method comprises obtaining first data (D1) indicative of a pressure distribution on a seat (12) of the vehicle, wherein the seat (12) is occupied by the occupant (18). The method further comprises obtaining second data (D2) indicative of a position and/or orientation of at least one body part (52, 53, 54, 55) of the occupant (18). Moreover, the method comprises providing third data (D3) indicative of an incapacitation of the occupant (18) based on the first data (D1) and based on the second data (D2). Moreover, the disclosure relates to a method for controlling the vehicle (10). The disclosure is also directed to a data processing apparatus (32), a computer program (40), and a computer-readable storage medium (38) for executing said methods. Furthermore, the disclosure relates to a system (44) for detecting an incapacitation of an occupant (18) of a vehicle (10) and to a vehicle (10) comprising the system (44).

## Description

### TECHNICAL FIELD

The present disclosure relates to a method for detecting an incapacitation of an occupant of a vehicle and to a method for controlling the vehicle.

The present disclosure also relates to a corresponding data processing apparatus, a computer program and to a computer-readable storage medium.

Moreover, the present disclosure is directed to a system for detecting an incapacitation of an occupant of a vehicle and to a vehicle comprising said system.

### BACKGROUND ART

An incapacitation of an occupant of a vehicle can occur during use of the vehicle. In this context, an incapacitation may be understood as a medical anomaly that deviates from a normal or expected medical condition. The normal or expected medical condition may for example be associated with the medical condition at the beginning of a drive cycle or at the beginning of a use of the vehicle. Thus, a medical anomaly would occur if the medical condition changes during the use of the vehicle. Additionally or alternatively, an incapacitation may be understood as a sleeping state and/or a drowsy state of the occupant.

If the driver of the vehicle suffers from the incapacitation, this may affect the driver's ability to control the vehicle. If the occupant suffering from the incapacitation, especially a medical anomaly, is a passenger, the medical anomaly may distract the driver of the vehicle. Both situations are problematic from the perspective of road safety.

### SUMMARY

It is therefore an objective of the present disclosure to improve the detection of an incapacitation of an occupant of a vehicle.

The problem is at least partially solved or alleviated by the subject matter of the independent claims of the present disclosure, wherein further examples are incorporated in the dependent claims.

According to a first aspect, there is provided a method for detecting an incapacitation of an occupant of a vehicle. The method comprises:
- obtaining first data indicative of a pressure distribution on a seat of the vehicle, wherein the seat is occupied by the occupant,
- obtaining second data indicative of a position and/or orientation of at least one body part of the occupant within an interior of the vehicle,
- providing third data indicative of an incapacitation of the occupant based on the first data and based on the second data.

In this context, obtaining the first data comprises receiving or determining the first data indicative of the pressure distribution on the seat of the vehicle. The pressure distribution is created by the weight of the occupant occupying the seat. The first data may encompass a pressure distribution on a seating surface of the seat. Additionally or alternatively, the first data may encompass a pressure distribution on a backrest of the seat. Further additionally or alternatively, the first data may encompass a pressure distribution on a headrest of the seat. The first data may be provided by and/or received from any sensor configured to indicate a pressure distribution on the seat of the vehicle or on a portion of the seat. Thus, the first data may be provided and/or received from a pressure sensor. According to an example, such a sensor may form part of a pressure sensing mat which may be arranged in a portion of the seat such as in the seating surface, the backrest or the headrest. According to another example, it is also possible to receive the first data from another data processing apparatus such as a server. The server may be a cloud server. Obtaining the second data comprises receiving or determining the second data indicative of a position and/or orientation of at least one body part of the occupant within an interior of the vehicle. In an example, the second data comprises image data, radar data and/or lidar data. Thus, in such an example, the second data may be provided and/or received from an optical camera, a radar unit and/or a lidar unit. According to another example, it is also possible to receive the second data from another data processing apparatus such as a server. The server may be a cloud server. The pressure distribution on the seat of the vehicle as well as the position and/or orientation of at least one body part of the occupant is indicative of a posture, more precisely different aspects of a posture, of the occupant. It is emphasized that the term occupant may comprise both a driver of the vehicle and a passenger of the vehicle. The third data indicative of an incapacitation of the occupant is provided based on the first data and based on the second data. This means that both types of data contribute to the determination and the provision of the third data. Due to the complementarity character of the first data and of the second data, the third data may be provided in an accurate and reliable manner. The first data may particularly be indicative of even small muscle tensions in the lower extremities of the occupant, which may not clearly express themselves in an overall position and/or orientation of a body part of the occupant. The second data may particularly be indicative of a position and/or orientation of the upper extremities of the occupant, which may not be discernible from the pressure distribution on the seat. Put otherwise, due to the fact that both first data and second data are considered, it is possible to distinguish combinations of pressure distributions on the seat and positions and/or orientations of at least one body part which are due to an ordinary movement of the occupant over such combinations of pressure distributions on the seat and positions and/or orientations of at least one body part which are due to an incapacitation, e.g. a medical anomaly, a change in medical condition or a change in an awakeness state.

According to an example, providing third data indicative of an incapacitation of the occupant based on the first data and based on the second data comprises comparing the first data to predefined and/or stored first data. Additionally or alternatively, the second data may be compared to predefined and/or stored second data. The predefined and/or stored first data and the predefined and/or stored second data may relate to known incapacitations, such as known medical anomalies, a known drowsy state of the occupant and/or a known sleeping state of the occupant. Put otherwise, the predefined and/or stored first data and the predefined and/or stored second data have been generated in a situation in which the occupant has been suffering from a known medical anomaly, a known drowsy state or has been sleeping. Thus, by comparing the first data to the predefined and/or stored first data, it is possible to find whether the first data are similar to predefined and/or stored first data associated with a known medical anomaly, a known drowsy state of the occupant being sleeping. In the same manner, by comparing the second data to the predefined and/or stored second data, it is possible to find whether the second data are similar to predefined and/or stored second data associated with a known medical anomaly, a known drowsy state or the occupant being sleeping. When combining the comparison of the first data to the predefined and/or stored first data and the comparison of the second data to the predefined and/or stored second data, it is possible to find out about a medical anomaly, a drowsy state or the occupant being sleeping in a reliable manner. In other words, third data indicative of an incapacitation of the occupant may be provided in a reliable manner.

In an example, the pressure distribution on the seat of the vehicle may be determined by one or by a plurality of pressure sensors and/or by at least one pressure sensing mat. The one or the plurality of pressure sensors and/or the pressure sensing mat may be attached to a surface of the seat or may be incorporated into a seat cushion and/or into a backrest cushion and/or into a headrest cushion of the seat. Said sensors may be able to provide the first data in a reliable manner. Attaching said sensors to the surface of the seat is a simple way of providing sensors to the seat at little additional manufacturing effort. Incorporating said sensors into the seat cushion and/or into the backrest cushion and/or into the headrest cushion is an elaborate technique that may provide a visually unchanged seat to an occupant compared to a seat without any sensory devices.

In an example, the first data is indicative of a chronological evolution of the pressure distribution on the seat of the vehicle. The chronological evolution is to be understood as a change of the pressure distribution on the seat of the vehicle over time. This has the effect that a movement of the occupant may be captured by the first data. In particular, even small movements of the lower extremities of the occupant may be identified in the first data. In this context, the movement of the occupant and/or the movement of the lower extremities of the occupant are understood as a change in position and/or orientation of the occupant and/or the lower extremities of the occupant from one point in time to another point in time. The first data being indicative of a chronological evolution of the pressure distribution has the effect that an accuracy and a reliability of the third data indicative of an incapacitation of the occupant is further increased.

In an example, the at least one body part comprises at least one of a torso, an arm, a leg, and a head of the occupant. This allows recognizing signs of general muscular relaxation, for instance during unconsciousness due to a heart attack, a stroke or a sleeping/drowsy state, or signs of muscular spasms, for instance during an epileptic seizure. For example, a healthy and attentive occupant, i.e. an occupant not suffering from an acute medical condition and being awake, is expected to hold his or her head and torso upright. The arms may be, at least during most of the time, expected to be held near the torso and/or near the steering wheel. A thigh as part of a leg of the occupant may be, at least during most of the time, expected to contact the seat cushion. Only from time to time, for example when actuating pedals of the vehicle, a thigh may slightly lift from the seat cushion. A torso tilted to the side or a head tilted to the side or a head and torso tilted to the side may be a sign that the occupant has lost his or her ability to maintain a muscular tone. Other signs of a loss in muscular tone may be a head being tilted downwards such that the occupant stares to a ground of the vehicle, the torso and the head tilted back such that the occupant stares to the roof linings of the vehicle or a closed eyelid. When unconscious, the occupant may even fall onto the steering wheel with his or her head or torso. During a muscular spasm, the torso of the occupant may be bowed, the head may be turned upwards and/or the occupant's arms may be directed away from the torso in an asymmetric fashion. Also, the legs of the occupant may become unusually stretched out during a muscular spasm, which is not an expected behavior while driving because the pedals cannot be actuated properly anymore.

In an example, the second data comprises image data, radar data and/or lidar data. Image data may be acquired by at least one optical camera arranged in the interior of the vehicle with a view on the occupant of the vehicle. Radar data or lidar data may be obtained through a radar unit or a lidar unit oriented towards the occupant of the vehicle. It is emphasized that the second data may also comprise any combination of image data, radar data and lidar data. Image data, radar data or lidar data are particularly suitable for indicating the positions and/or the orientations of the upper extremities of the occupant relative to each other. In other words, image data, radar data or lidar data are particularly suitable for indicating a posture of the occupant of the vehicle. Providing second data suitable for indicating a posture of the occupant of the vehicle allows a reliable generation of the third data indicative of an incapacitation of the occupant based on the second data.

In an example, the second data is further indicative of a movement of the occupant within an interior of the vehicle. This movement may be described by a plurality of chronologically ordered positions. The positions and, thus, the movement, may be expressed in three dimensions. The three-dimensional position and/or the three-dimensional movement of the occupant may be obtained by at least two optical cameras working together as a stereo camera. The three-dimensional position and/or the three-dimensional movement of the occupant may also be obtained through a radar unit and/or a lidar unit, which both provide depth information of detected objects inherent to the generated type of data. The three-dimensional position and/or the three-dimensional movement of the occupant within the interior of the vehicle helps in refining and increasing an accuracy of the provided third data indicative of an incapacitation of the occupant. For example, the torso of the driver of the vehicle may be tilted to the side which may indicate a loss in muscular tone due to unconsciousness. However, three-dimensional position and/or three-dimensional movement data may indicate that the driver of the vehicle is reaching to grab something from a rear seat of the vehicle. It is highly unlikely that a driver that has fallen unconscious is in a posture reaching towards the rear seat of the vehicle. On the contrary, it is highly likely that an awake and healthy driver without suffering from any acute medical condition is trying to reach to the rear seat of the vehicle. Thus, accuracy of the third data indicative of the incapacitation is increased. The accuracy of the third data can be increased even more when the three-dimensional movement of the occupant is considered.

In an example, the second data is further indicative of a speed and/or of an acceleration of the movement of the occupant. The speed of a movement is understood as a degree of change in position and/or orientation of the at least one body part of the occupant per time unit. The acceleration of the movement is understood as a degree of change in the speed of the movement per time unit. In the example of the occupant reaching to grab something from the rear seat of the vehicle, a swift and targeted three-dimensional movement may indicate that the driver of the vehicle intends to grab a desired object quickly in order to be able to refocus on traffic events after only a short period of inattentiveness. By contrast, if the torso of the driver of the vehicle is only slowly tilted to the side, this may indicate a loss in muscular tone due to unconsciousness and therefore an incapacitation.

In an example, the second data is further indicative of an amplitude of the movement of the occupant. The amplitude of the movement is understood as an absolute degree of change in position and/or orientation of the at least one body part of the occupant. For example, a slight tilt of the torso of the occupant to the side, e.g. by 3°, may not be regarded as a sign of an incapacitation of the occupant. However, a strong tile of the torso of the occupant to the side, e.g. by 10°, may indeed be regarded as indicative of an incapacitation of the occupant.

According to an example, providing third data indicative of an incapacitation of the occupant is based on the first data, the second data and on a data model. The data model may be a trained data model, e.g. using artificial intelligence. In this context, the data model may have been trained using training data indicative of a pressure distribution on a seat of the vehicle, indicative of a position and/or orientation of at least one body part of the occupant, and indicative of the presence or absence of an incapacitation of the occupant. Thus, during training, the data model learns which combinations of pressure distributions on a seat of the vehicle and positions and/or orientations of at least one body part of the occupant are associated with an incapacitation of the occupant and which combinations are not. Consequently, when used in the method of the first aspect, the data model may accurately and reliably provide third data indicative of an incapacitation of the occupant based on the first data and based on the second data.

According to a second aspect, there is provided a method for controlling a vehicle. The method comprises:
- detecting an incapacitation of an occupant of the vehicle using the method of the first aspect, and
- triggering a safety measure of the vehicle based on the third data.

Thus, the safety measure is triggered if the third data indicates that the occupant of the vehicle is incapacitated, e.g. if the occupant suffers from a medical anomaly or is in a sleeping/drowsy state. In case no incapacitation is detected, the method is abandoned, i.e. no safety measure is triggered. The safety measure helps keeping road safety high despite the fact that an occupant of the vehicle is incapacitated. It is emphasized that the occupant comprises both a driver of the vehicle and a passenger of the vehicle. Of course, the road safety also concerns other vehicles or, more generally speaking, other road users. In particular, accidents are avoided by the safety measure.

In an example in which a driver of the vehicle may have fallen unconscious, fallen asleep, or may suffer from muscular spasms due to a medical condition, for example such as a heart attack, a stroke and/or an epileptic seizure, a risk of collision of the vehicle with other vehicles, bystanders or infrastructure elements may be elevated due to the fact that the driver is not able to control the vehicle any more. Using the safety measure may significantly reduce this risk of collision. In another example in which a passenger of the vehicle suffers from a medical anomaly, the driver of the vehicle may get distracted from traffic events and thus, the likelihood of the vehicle getting involved in a traffic accident may be increased. Also here, this likelihood may be decreased by the safety measure.

In an example, the safety measure comprises at least one of triggering an optical warning, triggering an acoustic warning, triggering a haptic warning, triggering an activation of hazard lights of the vehicle, triggering an emergency call, requesting a speed reduction of the vehicle, requesting a standstill of the vehicle, requesting pulling over of the vehicle to a side of a road on which the vehicle is travelling, and requesting a drive of the vehicle to a medical facility. An optical warning, an acoustic warning and/or a haptic warning may help waking the driver of the vehicle up from a sleeping and/or drowsy state in order that he or she regains full attention to traffic events. If any occupant of the vehicle suffers from a medical anomaly, the optical warning, the acoustic warning and/or the haptic warning may direct the attention of the driver or other passengers of the vehicle towards the occupant suffering from the medical anomaly. Thus, the driver or other passengers of the vehicle can quickly seek medical assistance for the occupant suffering from the medical anomaly. Triggering an activation of hazard lights of the vehicle may inform other traffic participants of a hazard that the vehicle may pose to them and/or of the fact that the vehicle has a problem. In case of an incapacitation of the occupant, the vehicle may make sudden turns or stop unexpectedly. Other traffic participants, especially while driving, may keep a distance to the vehicle if warned by the hazard lights, thereby reducing the likelihood for an accident caused by an incapacitation of the occupant of the vehicle. Triggering an emergency call may be particularly helpful if the occupant who is incapacitated suffers from a medical anomaly and is the only occupant in the vehicle. Due to his or her medical anomaly, the driver may not be able to call medical assistance himself or herself. Having this done by the method of the second aspect, a time to arrival of medical personnel at a scene where the medical anomaly of the occupant occurred maybe reduced. This may prevent or at least reduce medical consequences of the medical anomaly. Requesting a speed reduction of the vehicle, requesting a standstill of the vehicle, requesting pulling over of the vehicle to the side of the road on which the vehicle is traveling and/or requesting are all reaction measures in the event that the driver of the vehicle is incapacitated. In particular, these reaction measures may be taken if the driver of the vehicle could not be woken up by an optical warning, an acoustic warning and/or a haptic warning. Requesting a drive of the vehicle to a medical facility is a particular reaction measure that may be introduced if the driver of the vehicle suffers from a medical anomaly. A control of the movement of the vehicle, particularly the control of lateral and longitudinal movement of the vehicle, transfers the vehicle in a state in which the likelihood of the vehicle getting involved in accidents with other vehicles, bystanders or infrastructure elements is significantly reduced. Thus, road safety is enhanced even in a case in which the driver of the vehicle is suffering from a medical anomaly such as a heart attack, a stroke and/or an epileptic seizure.

The method of the first aspect and/or of the second aspect may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a third aspect, there is provided a data processing apparatus comprising means for carrying out the method of the first aspect and/or the method of the second aspect. Using such a data processing apparatus, an incapacitation of an occupant of a vehicle can be detected and/or the vehicle can be controlled in a reliable manner. In particular, the third data indicative of an incapacitation of the occupant is accurate and can be relied upon when the data processing apparatus needs to decide whether to trigger a safety measure or not. This is due to the complementarity character of the first data and of the second data. The first data may particularly be indicative of even small muscle tensions in the lower extremities of the occupant, which may not clearly express themselves in an overall position and/or orientation of a body part of the occupant. The second data may particularly be indicative of a position and/or orientation of the upper extremities of the occupant, which may not be discernible from the pressure distribution on the seat. Put otherwise, due to the fact that both first data and second data are considered, it is possible to distinguish combinations of pressure distributions on the seat and positions and/or orientations of at least one body part which are due to an ordinary movement of the occupant over such combinations of pressure distributions on the seat and positions and/or orientations of at least one body part which are due to an incapacitation, e.g. a medical anomaly, a change in medical condition or a change in an awakeness state.

According to a fourth aspect, there is provided a computer program comprising instructions which, when the computer program is executed by a computer, cause the computer to carry out the method of the first aspect and/or the method of the second aspect. Using such a computer program, an incapacitation of an occupant of a vehicle can be detected and/or the vehicle can be controlled in a reliable manner. In particular, the third data indicative of an incapacitation of the occupant is particularly accurate and can be relied upon when the computer program needs to decide whether to trigger a safety measure or not. This is due to the complementarity character of the first data and of the second data. The first data may particularly be indicative of even small muscle tensions in the lower extremities of the occupant, which may not clearly express themselves in an overall position and/or orientation of a body part of the occupant. The second data may particularly be indicative of a position and/or orientation of the upper extremities of the occupant, which may not be discernible from the pressure distribution on the seat. Put otherwise, due to the fact that both first data and second data are considered, it is possible to distinguish combinations of pressure distributions on the seat and positions and/or orientations of at least one body part which are due to an ordinary movement of the occupant over such combinations of pressure distributions on the seat and positions and/or orientations of at least one body part which are due to an incapacitation, e.g. a medical anomaly, a change in medical condition or a change in an awakeness state.

According to a fifth aspect, there is provided a computer-readable storage medium comprising instructions which, when executed by a computer, cause the computer to carry out the method of the first aspect and/or the method of the second aspect. Using such a computer-readable storage medium, an incapacitation of an occupant of a vehicle can be detected and/or the vehicle can be controlled in a reliable manner. In particular, the third data indicative of an incapacitation of the occupant is particularly accurate and can be relied upon when the computer program on the computer-readable storage medium needs to decide whether to trigger a safety measure or not. This is due to the complementarity character of the first data and of the second data. The first data may particularly be indicative of even small muscle tensions in the lower extremities of the occupant, which may not clearly express themselves in an overall position and/or orientation of a body part of the occupant. The second data may particularly be indicative of a position and/or orientation of the upper extremities of the occupant, which may not be discernible from the pressure distribution on the seat. Put otherwise, due to the fact that both first data and second data are considered, it is possible to distinguish combinations of pressure distributions on the seat and positions and/or orientations of at least one body part which are due to an ordinary movement of the occupant over such combinations of pressure distributions on the seat and positions and/or orientations of at least one body part which are due to an incapacitation, e.g. a medical anomaly, a change in medical condition or a change in an awakeness state.

According to a sixth aspect, there is provided a system for detecting an incapacitation of an occupant of a vehicle. The system comprises:
- a first sensing element for generating first data indicative of a pressure distribution on a seat of the vehicle,
- a second sensing element for generating at least a portion of the second data indicative of a position and/or orientation of at least one body part of the occupant within an interior of the vehicle, and
- a data processing apparatus according to the third aspect.
The first sensing element and the second sensing element are communicatively connected to the data processing apparatus. The data processing apparatus comprises a communication interface for providing the third data indicative of an incapacitation of the occupant based on the first data and based on the second data.

The pressure distribution is created by the weight of the occupant occupying the seat. The first data may encompass a pressure distribution on a seating surface of the seat. Additionally or alternatively, the first data may encompass a pressure distribution on a backrest of the seat. Further additionally or alternatively, the first data may encompass a pressure distribution on a headrest of the seat. The second data is indicative of a position and/or orientation of at least one body part of the occupant within an interior of the vehicle. The pressure distribution on the seat of the vehicle as well as the position and/or orientation of at least one body part of the occupant is indicative of a posture, more precisely different aspects of a posture, of the occupant. It is emphasized that the term occupant may comprise both a driver of the vehicle and a passenger of the vehicle. The third data indicative of an incapacitation of the occupant is provided based on the first data and based on the second data. This means that both type of data contribute to the determination and the provision of the third data. Due to the complementarity character of the first data and of the second data, the third data may be provided in an accurate and reliable manner. The first data may particularly be indicative of even small muscle tensions in the lower extremities of the occupant, which may not clearly express themselves in an overall position and/or orientation of a body part of the occupant. The second data may particularly be indicative of a position and/or orientation of the upper extremities of the occupant, which may not be discernible from the pressure distribution on the seat. Put otherwise, due to the fact that both first data and second data are considered, it is possible to distinguish combinations of pressure distributions on the seat and positions and/or orientations of at least one body part which are due to an ordinary movement of the occupant over such combinations of pressure distributions on the seat and positions and/or orientations of at least one body part which are due to an incapacitation, e.g. a medical anomaly, a change in medical condition or a change in an awakeness state.

In an example, the first sensing element comprises a pressure sensor and/or a pressure sensing mat arrangeable in or on a seat of the vehicle. The pressure distribution on the seat of the vehicle may also be determined by a plurality of pressure sensors. One or a plurality of pressure sensors and/or the pressure sensing mat may be attached to a surface of the seat or may be incorporated into a seat cushion and/or a backrest cushion and/or a headrest cushion of the seat. Said sensors may be able to provide the first data in a reliable manner. Attaching said sensors to the surface of the seat is a simple way of providing sensors to the seat at little additional manufacturing effort. Incorporating said sensors into the seat cushion and/or the backrest cushion and/or the headrest cushion is an elaborate technique that may provide a visually unchanged seat to an occupant compared to a seat without any sensory devices.

In an example, the system further comprises a third sensing element for generating at least a portion of the second data indicative of a position and/or orientation of at least one body part of the occupant within the interior of the vehicle. Thus, the system comprises at least two sensing elements for generating at least a portion of the second data. At least two sensing elements for generating at least a portion of the second data have the effect that a more comprehensive second data may be provided compared to only one sensing element for generating the second data. Hence, an accuracy of the third data, which is provided based on the first data and based on the second data, may be increased. The at least two sensing elements, namely the second sensing element and the third sensing element, may be sensing elements of the same type or may be sensing elements of a different type. At least two sensing elements of the same type may particularly provide more comprehensive second data than one sensing element if they sense the position and/or orientation of the at least one body part of the occupant from different perspectives. Of course, at least two sensing elements of a different type may also provide more comprehensive second data than one sensing element if they sense the position and/or orientation of the at least one body part of the occupant from a different perspective. Moreover, at least two sensing elements of a different type may still provide more comprehensive second data than one sensing element if they sense the position and/or orientation of the at least one body part of the occupant from the same perspective due to different characteristics of sensing principles and due to the different kinds of data that the different types of sensing elements provide.

In an example, the second sensing element and/or the third sensing element comprises an optical camera, a radar unit and/or a lidar unit configured to capture at least one of a torso, an arm, a leg and a head of the occupant. An optical camera arranged in the interior of the vehicle with a view on the occupant of the vehicle may acquire image data of the posture of the occupant of the vehicle. A radar unit or a lidar unit that is oriented towards the occupant of the vehicle may provide radar data or lidar data of the posture of the occupant, respectively. Image data, radar data and/or lidar data are particularly suitable for indicating the positions and/or the orientations of the upper extremities of the occupant of the vehicle relative to each other. In other words, image data, radar data or lidar data are particularly suitable for indicating a posture of the occupant of the vehicle. Providing second data suitable for indicating a posture of the occupant of the vehicle allows a reliable generation of the third data indicative of an incapacitation of the occupant based on the second data. The reliability of the third data is even further increased by a combination of first data and second data, thus a combination of the pressure distribution on the seat, image data, radar data and/or lidar data.

In an example, an optical camera as second sensing element and another optical camera as third sensing element may provide at least portions of the second data. The two cameras may work together as a stereo camera. Thus, the two cameras may provide a three-dimensional representation of the posture of the occupant.

In an example, the at least two sensing elements for generating at least a portion of the second data indicative of a position and/or orientation of at least one body part of the occupant within the interior of the vehicle may comprise at least two sensing elements per occupant of the vehicle. In an example of five seats in a vehicle, the system may comprise five times at least two sensing elements for generating at least a portion of the second data. In an example, the system may comprise at least one optical camera per occupant. In another example, the system may comprise two cameras and two radar sensors per occupant. In a further example, the system may comprise three to seven sensors for generating at least a portion of the second data per occupant.

According to a seventh aspect, there is provided a vehicle comprising a system for detecting an incapacitation of an occupant of the vehicle according to the sixth aspect. Providing such a vehicle allows detecting an incapacitation of an occupant of the vehicle. Moreover, such a vehicle may be controlled upon detecting an incapacitation of an occupant of the vehicle in a way that it performs a safety measure.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle according to the present disclosure comprising a data processing according to the present disclosure for executing a method according to the present disclosure for detecting an incapacitation of an occupant of a vehicle and a method according to the present disclosure for controlling the vehicle,
- Figure 2: shows a seat cushion of a seat of the vehicle of Figure 1 in a partly transparent view comprising an integrated pressure sensing mat,
- Figure 3: shows an example of a pressure distribution created by an occupant of the vehicle of Figure 1 as provided by the pressure sensing mat of Figure 2,
- Figure 4: shows another example of a pressure distribution created by an occupant of the vehicle of Figure 1 as provided by a pressure sensing mat integrated inside or attached to a surface of a backrest of the seat of the vehicle of Figure 1,
- Figure 5: schematically shows an occupant of the vehicle of Figure 1 who has fallen onto a steering wheel of the vehicle of Figure 1,
- Figure 6: schematically shows an occupant of the vehicle of Figure 1 who is staring downwards,
- Figure 7: schematically shows an occupant of the vehicle of Figure 1 having his or her torso tilted back and staring upwards,
- Figure 8: schematically shows an occupant of the vehicle of Figure 1 having his or her head tilted,
- Figure 9: schematically shows an occupant of the vehicle of Figure 1 having his or her torso tilted,
- Figure 10: schematically shows an occupant of the vehicle of Figure 1 having his or her head and torso tilted to the side,
- Figure 11: schematically shows an occupant of the vehicle of Figure 1 having his or her torso bowed and his or her head turned upwards,
- Figure 12: schematically shows an occupant of the vehicle of Figure 1 having his or her body arched such that an occupant's bottom is lifted from the seat, and
- Figure 13: shows steps of the method according to the present disclosure for detecting an incapacitation of an occupant of a vehicle and steps of the method according to the present disclosure for controlling the vehicle.

### DETAILED DESCRIPTION

The Figures are merely schematic representations and serve only to illustrate examples of the disclosure. Identical or equivalent elements are in principle provided with the same reference signs.

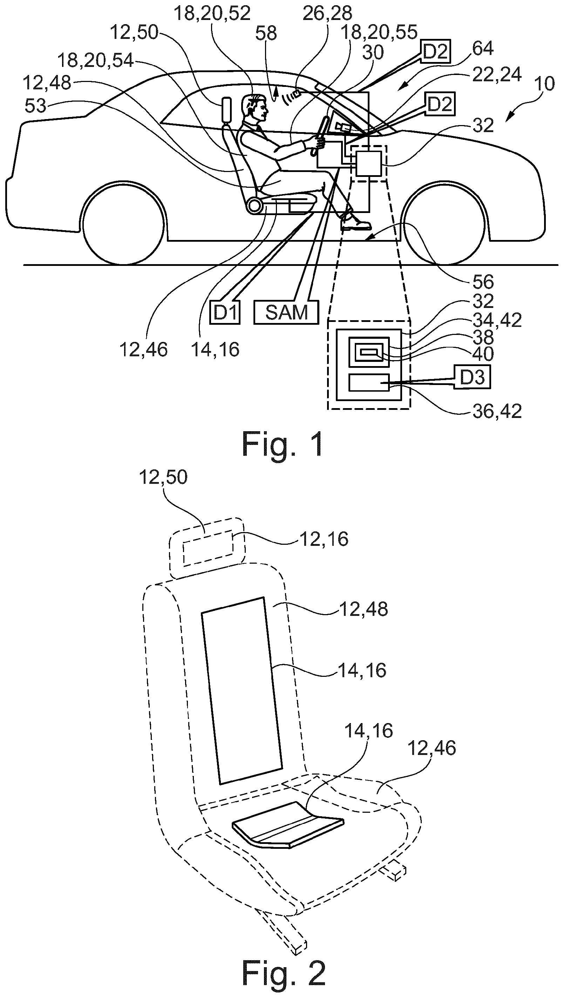

Figure 1 shows a vehicle 10.

The vehicle 10 comprises a seat 12.

The seat 12 comprises a pressure sensing mat 14 which is also designated as a first sensing element 16.

An occupant 18 of the vehicle is sitting on the seat 12. In the present example, the occupant 18 is a driver 20 of the vehicle 10. Thus, the seat 12 shown in Figure 1 is a driver's seat 12 of the vehicle 10.

Due to his or her weight, the occupant 18 of the vehicle 10 exercises pressure onto the pressure sensing mat 14 of the seat 12.

The vehicle 10 further comprises a camera 22 which is also designated as a second sensing element 24 and a radar unit 26 which is also designated as a third sensing element 28.

The camera 22 and the radar unit 26 form part of a driver monitoring system. Hence, the camera 22 and the radar unit 26 observe the occupant 18 of the vehicle 10. More precisely, the camera 22 and the radar unit 26 observe a position and/or orientation of at least one body part of the occupant 18 of the vehicle 10.

It is noted that the position and/or orientation of the at least one body part of the occupant 18 of the vehicle 10 may also be observed by a lidar unit. However, this is not shown in Figure 1.

Moreover, the vehicle 10 comprises a steering wheel 30. In the present example, the steering wheel 30 is able to vibrate.

Furthermore, the vehicle 10 comprises a data processing apparatus 32.

The pressure sensing mat 14, the camera 22, the radar unit 26 and the steering wheel 30 are communicatively connected to the data processing apparatus 32.

The data processing apparatus 32 comprises a data storage unit 34 and a data processing unit 36.

The data storage unit 34 comprises a computer-readable storage medium 38.

On the computer-readable storage medium 38, there is provided a computer program 40.

The computer program 40 and, thus, also the computer-readable storage medium 38, comprise instructions which, when executed by the data processing unit 36, or, more generally speaking, a computer, cause the computer or the data processing unit 36 to carry out a method for detecting an incapacitation of the occupant of the vehicle. This method may be called a first method.

The computer program 40 and, thus, also the computer readable storage medium 38, further comprise instructions which, when executed by the data processing unit 36 or, more generally speaking, a computer, cause the computer or the data processing unit 36 to carry out a method for controlling the vehicle 10. This method may be called a second method.

Consequently, the data storage unit 34 and the data processing unit 36 form means 42 for carrying out the first method and the second method.

The pressure sensing mat 14, the camera 22, the radar unit 26 and the data processing apparatus 32 form a system 44 for detecting an incapacitation of an occupant 18 of the vehicle 10.

An illustration of steps of the second method is given in Figure 13.

The second method, i.e. the method for controlling the vehicle, comprises two steps.

In step S1 of the second method, an incapacitation of an occupant 18 of the vehicle 10 is detected.

This is achieved by executing the first method, i.e. the method for detecting an incapacitation of an occupant of a vehicle, which comprises three steps that are also schematically shown in Figure 13.

A first step S11 of the first method comprises obtaining first data D 1 indicative of a pressure distribution on the seat 12 of the vehicle 10.

This is achieved through the pressure sensing mat 14 that is integrated into the seat 12 of the vehicle 10. An illustration of the pressure sensing mat 14 being integrated into the seat 12 of the vehicle 10 is given in Figure 2.

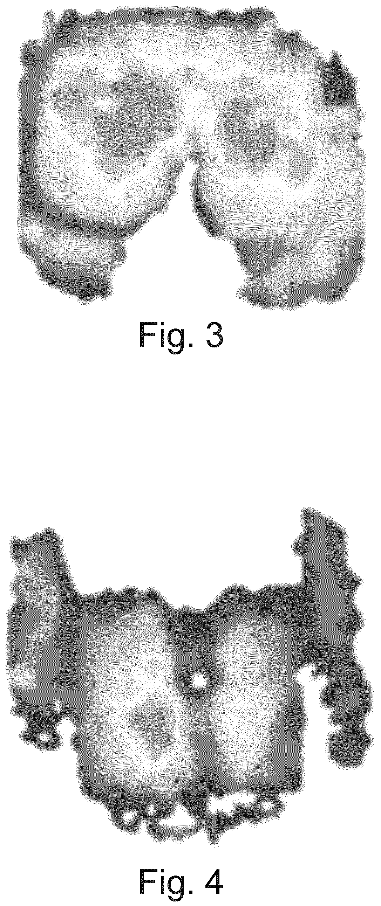

When an occupant 18 is sitting on the seat 12, a pressure distribution as shown in Figures 3 and 4 may be provided by the pressure sensing mat 14.

The pressure distribution shown in Figure 3 is a pressure distribution obtained from a pressure sensing mat 14 incorporated into a seat cushion 46 of the seat 12 of the vehicle 10. It shows a similar pressure distribution on its left half and on its right half.

The pressure distribution shown in Figure 4 is a pressure distribution obtained from a pressure sensing mat 14 incorporated into a backrest 48 of the seat 12 of the vehicle 10. From the pressure distribution in Figure 4, it is observable that more pressure is exercised onto a left half of the backrest 48 of the seat 12 as compared to a right half of the backrest 48 of the seat 12.

Additionally or alternatively, a pressure sensing mat 14 may also be incorporated into a headrest 50 of the seat 12 of the vehicle 10 on which the occupant 18 is sitting. Such a pressure sensing mat 14 indicates the pressure that a head 52 of the occupant 18 exercises onto the headrest 50.

The sensed pressure distribution and a chronological evolution thereof is received by the data processing apparatus 32.

This allows the data processing apparatus 32 to detect even small variations in the sitting position of the occupant 18, muscular tensions and small movements of the lower extremities of the occupant 18.

In the second step S12 of the second method, second data D2 indicative of a position and/or orientation of at least one body part of the occupant 18 within an interior of the vehicle 10 is obtained.

This is achieved using the camera 22 and the radar unit 26.

The camera 22 detects an orientation and a position of at least one of a torso 54, an arm 55, a leg 53 and a head 52 of the occupant 18. Thus, the camera 22 detects an orientation and a position of extremities, particularly of upper extremities, of the occupant 18.

The radar unit 26 detects a three-dimensional position and a three-dimensional movement of the occupant 18 within an interior of the vehicle 10.

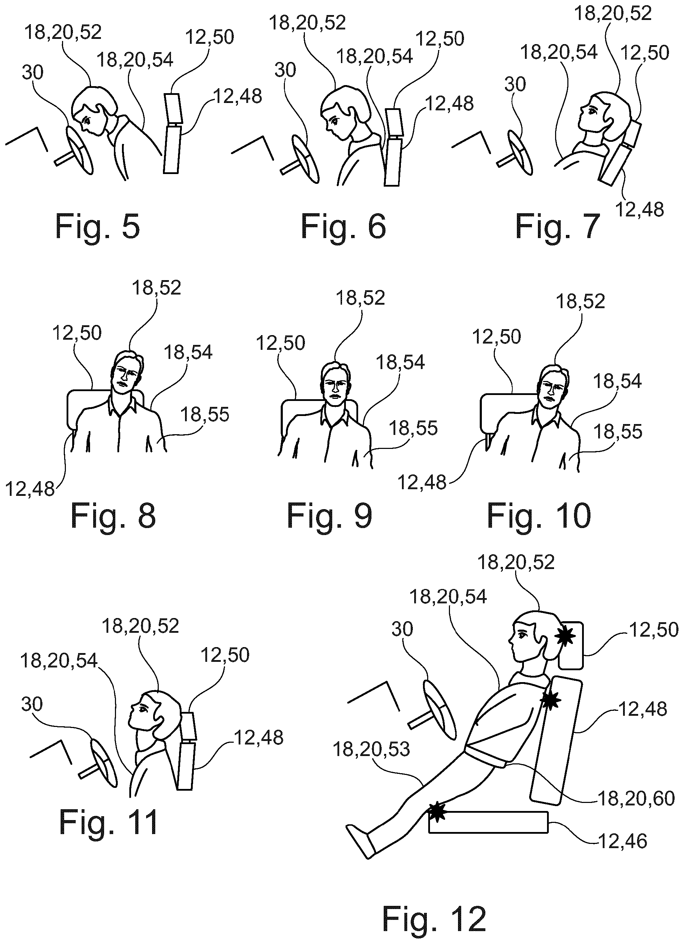

Examples of postures of the occupant 18 that can be detected by the camera 22 and the radar unit 26 are shown in Figures 5 to 11.

In Figure 5, the driver 20 of the vehicle 10 has its torso 54 tilted forward and his head 52 has fallen onto the steering wheel 30.

Based on the second data D2 provided by the camera 22 one may detect that a head 52 of the driver 20 is in contact with the steering wheel 30.

In this situation, the pressure sensing mat 14 incorporated into the backrest 48 of the driver's seat 12 may sense a reduced pressure in the upper region of the backrest 48.

Thus, the driver 20 of the vehicle 10 may suffer from a sudden loss in muscular tone, for example due to a heart attack, a stroke or because the driver 20 has fallen asleep. Based on the first data D1 and the second data D2, the computer program 40 on the data processing apparatus 32 may recognize a posture as shown in Figure 5 and infer that the driver 20 is incapacitated.

In Figure 6, the torso 54 of the driver 20 of the vehicle 10 is still upright. However, his or her head 52 is tilted forwards so that a face of the driver 20 is oriented towards a floor 56 of the vehicle 10. Moreover, eyes, i.e. eyelids, of the driver 20 are closed. This may be a continuous or a persistent posture.

Based on the second data D2 provided by the camera 22 one may detect that the head 52 of the driver 20 is oriented into a downwards direction and that the eyes of the driver 20 are closed.

An additional pressure sensing mat 14 incorporated into the headrest 50 of the driver's seat 12 may detect a loss in pressure exercised by the head 52 of the driver 20 onto the headrest 50.

The driver 20 may suffer from a sudden loss in muscular tone due to unconsciousness that may originate from a medical anomaly. Again, based on the first data D1 and the second data D2, the computer program 40 on the data processing apparatus 32 may recognize a posture as shown in Figure 6 and infer that the driver 20 is incapacitated.

It is noted that the collapsed postures of the above-explained Figures 5 and 6 may not only be due to unconsciousness and a consequential loss in muscular tone. Similar postures, i.e. second data, would also result from abdominal pain, abdominal cramps or while vomiting. However, particularly the first data D 1 obtained from the pressure sensing mat 14 in the seat cushion 46 would indicate a muscular contraction from local pressure peaks as opposed to a more uniform pressure distribution in case of muscular relaxation.

In Figure 7, the torso 54 of the driver 20 is tilted backwards. Moreover, the driver appears to stare at roof linings 58 of the vehicle 10.

Based on the second data D2 provided by the camera 22 one may detect the orientation of the head 52, in particular the orientation of the face, of the driver 20 towards the roof linings 58 of the vehicle 10.

Additionally, a pressure sensing mat 14 integrated into the backrest 48 and/or the headrest 50 of the driver's seat 12 may detect an increased pressure that the unconscious driver exercises onto the backrest 48 and/or the headrest 50 of the driver's seat 12 compared to the pressure that a conscious driver 20 being in a posture attentive of traffic events would exercise onto the backrest 48 and/or on the headrest 50 of the driver's seat 12.

Thus, also in this scenario, the driver 20 suffers from a loss of consciousness due to a medical anomaly or may have fallen asleep. Based on the first data D1 and the second data D2, the computer program 40 on the data processing apparatus 32 may recognize a posture as shown in Figure 7 and infer that the driver 20 is incapacitated.

It is noted that the most common postures of occupants 18 subject to incapacitation may be the postures illustrated in the aforementioned Figures 5 to 7.

Figure 8 shows that the head 52 of the occupant 18 of the vehicle 10 is tilted with respect to an upright torso 54 of the occupant 18 of the vehicle 10. This may be a continuous or a persistent posture.

Based on the second data D2 provided by the camera 22 one may detect the head 52 tilted with respect to the torso 54 of the occupant 18.

Additionally, the pressure sensing mat 14 integrated into the seat cushion 46 of the seat 12 of the occupant 18 detects an increased pressure on the right half of the seat cushion 46 when viewed from a perspective as shown in Figure 8.

Thus, the occupant 18 is sleeping and is inattentive of traffic events. Based on the first data D 1 and the second data D2, the computer program 40 on the data processing apparatus 32 may recognize a posture as shown in Figure 8 and infer that the occupant 18 is incapacitated.

In Figure 9, the torso 54 of the occupant 18 of the vehicle 10 is tilted to the right. However, the head 52 of the occupant 18 is still oriented straight. This may be a continuous or a persistent posture. This may indicate that the occupant 18 is just on the verge of falling unconscious due to a medical anomaly or because the occupant 18 is tired and is about to fall asleep. However, this may also indicate that the occupant 18 is simply trying to reach something from a rear seat of the vehicle 10 while keeping his eyes on the road.

Based on the second data D2 provided by the camera 22 one may detect the tilted torso 54 of the occupant 18.

Additionally, the pressure sensing mat 14 integrated into the backrest 48 of the occupant's seat 12 detects a chronological evolution from a symmetric pressure distribution to an asymmetric pressure distribution with more pressure detected on the right half of the backrest 48 of the occupant's seat 12 than on the left half of the backrest 48 of the occupant's seat 12 when viewed in a direction as shown in Figure 9.

Additionally, based on the second data D2 provided by the radar unit 26 one may detect the three-dimensional position and three-dimensional movement of the torso 54 of the occupant 18 of the vehicle 10. From the three-dimensional data, it becomes apparent that the torso 54 of the occupant 18 is not tilted backwards as it would be if the occupant was trying to reach something from the rear seat of the vehicle 10.

On the contrary, based on the second data D2 provided by the radar unit 26 one may detect that the torso 54 of the occupant 18 has moved from a straight orientation to a tilted orientation in a movement parallel to the plane of the backrest 48 of the occupant's seat 12.

This indicates that the occupant 18 is actually on the verge of falling unconscious due to a medical anomaly or is on the verge of falling asleep because of tiredness.

Thus, based on the first data D1 and the second data D2, the computer program 40 on the data processing apparatus 32 may recognize a posture as shown in Figure 9 and infer that the driver 20 is incapacitated .

In Figure 10, both the head 52 and the torso 54 of the occupant 18 are tilted to the right. This may be a continuous or a persistent posture.

Based on the second data D2 provided by the camera 22 one may detect the tilted head 52 and the tilted torso 54 of the occupant 18.

Additionally, the pressure sensing mat 14 integrated into the backrest 48 of the occupant's seat 12 and the pressure sensing mat 14 integrated into the headrest 50 of the occupant's seat 12 may detect an asymmetric pressure distribution with more pressure detected in the right half than in the left half when viewed in a direction as shown in Figure 10.

Thus, it may be concluded that the occupant 18 has completely lost consciousness due to a medical anomaly or has fallen asleep. Based on the first data D1 and the second data D2, the computer program 40 on the data processing apparatus 32 may recognize a posture as shown in Figure 10 and infer that the occupant 18 is incapacitated.

In Figure 11, the torso 54 of the driver 20 is bowed and his or her head 52 and face is turned towards the roof linings 58 of the vehicle 10.

Based on the second data D2 provided by the camera 22 one may detect that the head 52 of the driver 20 is tilted backwards.

Additionally, the pressure sensing mat 14 integrated into the backrest 48 of the driver's seat detects a reduction in pressure in the upper region of the backrest 48.

Thus, it may be concluded that this posture of the driver 20 is due to a sudden muscular spasm, for example due to an epileptic seizure. In other words, it may be concluded that the occupant 18 is suffering from a medical anomaly. Based on the first data D1 and the second data D2, the computer program 40 on the data processing apparatus 32 may recognize a posture as shown in Figure 10 and infer that the occupant 18 is incapacitated.

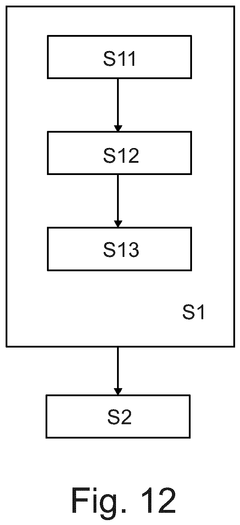

In Figure 12, a bottom 60 of the driver 20 is lifted from the seat 12. Thus, the driver 20 contacts the seat 12 in a first contact point with his or her leg 53 in a front portion of the seat cushion 46 and in a second contact point with his or her upper torso 54 in an upper portion of the backrest 48. Additionally, the driver's 20 head 52 is thrown backwards and contacts the headrest 50 in a third contact point. In other words, it may be said that a body of the driver 20 is stiff and arched since the body forms an arch between the first contact point and the second contact point.

The first data D1 provided by pressure sensing mats 14 incorporated into the seat cushion 46, into the backrest 48 and into the headrest 50 indicates strong local pressure concentrations in the front portion of the seat cushion 46, in the upper portion of the backrest 48 and in the headrest 50.

The second data D2 provided by the camera 22 and/or by the radar unit 26 reflects the arched posture of the driver 20. Additionally, the second data D2 may be indicative of repetitive movements of an arm 55, of a leg 53 and/or of the torso of the driver 20.

The repetitive movements may particularly comprise a quick jerking movement of an arm 55 or of a leg 53. Both arms 55 and/or both legs 53 may be subject to the quick jerking movement. Additionally or alternatively, at least one arm 55 on one side of the torso 54 (left or right) and at least one leg 53 on the respective other side of the torso (right or left) may be subject to the quick jerking movement.

The repetitive movements may also comprise a sequence of involuntary muscular contractions followed by slow repetitive movements of an arm 55, a leg 53, the head 52 and/or the torso 54. These may be followed by rhythmic movements of said limbs. All in all, such a sequence of movements may be perceived as abnormal movements.

Moreover, the second data D2 may be indicative of the stiff body of the driver 20 in time periods between the repetitive movements. The second data D2 may also be indicative of straight arms 55, straight legs 53 and pointed toes, clenched fists or bent arms 55 to hold hands on a chest of the driver 20.

Thus, it may be concluded that this posture and the unusual movements of the driver 20 are due to the medical anomaly of a seizure, more specifically an epileptic seizure. Based on the first data D1 and the second data D2, the computer program 40 on the data processing apparatus 32 may recognize a posture as shown in Figure 12 and infer that the driver 20 is incapacitated.

In the third step S13 of the second method, the conclusion on a medical condition or on a sleeping/drowsy state of the occupant 18 of the vehicle 10 is provided as third data D3 indicative of an incapacitation of the occupant. Since the conclusion on the incapacitation of the occupant is based on the first data D1 and on the second data D2, also the third data D3 is based on the first data D1 and on the second data D2.

It is advantageous to consider both the first data D 1 and the second data D2 to provide accurate and comparatively early detections of a medical anomaly of an occupant 18. This is in particular the case in comparison to only using the first data D1 or only the second data D2.

A high level of accuracy of the incapacitation detection ensures that a reaction to the detection result is appropriate to the actual condition of incapacitation of the occupant 18 of the vehicle 10.

The reaction to the detection result is provided in the second step S2 of the first method.

The second step S2 of the first method comprises triggering a safety measure SAM.

In the example of Figure 1, the safety measure SAM comprises providing a haptic warning to the driver 20 of the vehicle 10. This is achieved by activating a shaker motor built into the steering wheel 30 of the vehicle 10 in order that the steering wheel 30 starts to vibrate.

This helps waking up the driver 20 of the vehicle when he or she is in a drowsy state, on the verge of falling asleep or already sleeping.

Hence, attentiveness of the driver 20 for traffic events can be restored through the safety measure SAM.

Other alternatives of the safety measure SAM include an optical warning and/or an acoustic warning provided to the occupant 18 of the vehicle 10.

Another alternative of the safety measure SAM may include triggering an activation of hazard lights of the vehicle in order to warn other traffic participants of potentially unexpected driving behavior of the vehicle.

In severe cases of medical anomalies of the occupant 18, particularly if the occupant 18 is the driver 20 of the vehicle 10, the vehicle 10 may be triggered to make an emergency call and/or to reduce its speed and/or to come to a standstill and/or to pull over to the side of a road on which the vehicle is traveling and/or to drive to a medical facility in an autonomous driving mode.

This way, a potentially dangerous traffic situation can be mitigated and road safety is ensured. Furthermore, due to a fast provision of medical assistance, permanent damage to the body of the occupant from the medical condition can be prevented or at least reduced.

It is noted that the above explanations have been centered around an occupant 18 of the vehicle 10 being the driver. Of course, the methods as explained above may as well be executed in connection with other occupants, i.e. passengers of the vehicle 10.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: seat
- 14: pressure sensing mat
- 16: first sensing element
- 18: occupant
- 20: driver
- 22: camera
- 24: second sensing element
- 26: radar unit
- 28: third sensing element
- 30: steering wheel
- 32: data processing apparatus
- 34: data storage unit
- 36: data processing unit
- 38: computer-readable storage medium
- 40: computer program
- 42: means for carrying out the first method and the second method
- 44: system
- 46: seat cushion
- 48: backrest
- 50: headrest
- 52: head
- 53: leg
- 54: torso
- 55: arm
- 56: floor
- 58: roof linings
- 60: bottom

- SAM: safety measure
- D 1: first data
- D2: second data
- D3: third data

## Claims

1. A method for detecting an incapacitation of an occupant (18) of a vehicle (10), the method comprising:
- obtaining first data (D1) indicative of a pressure distribution on a seat (12) of the vehicle (10), wherein the seat (12) is occupied by the occupant (18),
- obtaining second data (D2) indicative of a position and/or orientation of at least one body part (52, 53, 54, 55) of the occupant (18) within an interior of the vehicle (10),
- providing third data (D3) indicative of an incapacitation of the occupant (18) based on the first data (D1) and based on the second data (D2).

2. The method according to claim 1, wherein the first data (D1) is indicative of a chronological evolution of the pressure distribution on the seat (12) of the vehicle (10).

3. The method according to claim 1 or 2, wherein the at least one body part (52, 53, 54, 55) comprises at least one of a torso (54), an arm (55), a leg (53), and a head (52) of the occupant (18).

4. The method according to any one of the preceding claims, wherein the second data (D2) comprises image data, radar data and/or lidar data.

5. The method according to any one of the preceding claims, wherein the second data (D2) is further indicative of a movement of the occupant (18) within the interior of the vehicle (10).

6. A method for controlling a vehicle (10), the method comprising:
- detecting an incapacitation of an occupant (18) of the vehicle (10) using the method of any one of the preceding claims, and
- triggering a safety measure (SAM) of the vehicle (10) based on the third data (D3).

7. The method according to claim 6, wherein the safety measure (SAM) comprises at least one of triggering an optical warning, triggering an acoustic warning, triggering a haptic warning, triggering an activation of hazard lights of the vehicle (10), triggering an emergency call, requesting a speed reduction of the vehicle (10), requesting a standstill of the vehicle (10), requesting pulling over of the vehicle (10) to a side of a road on which the vehicle (10) is travelling, and requesting a drive of the vehicle (10) to a medical facility.

8. A data processing apparatus (32) comprising means (42) for carrying out the method of any one of claims 1 to 5 and/or the method of claim 6 or 7.

9. A computer program (40) comprising instructions which, when the computer program (40) is executed by a computer, cause the computer to carry out the method of any one of claims 1 to 5 and/or the method of claim 6 or 7.

10. A computer-readable storage medium (38) comprising instructions which, when executed by a computer, cause the computer to carry out the method of any one of claims 1 to 5 and/or the method of claim 6 or 7.

11. A system (44) for detecting an incapacitation of an occupant (18) of a vehicle (10), the system (44) comprising:
- a first sensing element (16) for generating first data (D1) indicative of a pressure distribution on a seat (12) of the vehicle (10),
- a second sensing element (24) for generating at least a portion of the second data (D2) indicative of a position and/or orientation of at least one body part (52, 53, 54, 55) of the occupant (18) within an interior of the vehicle (10), and
- a data processing apparatus (32) according to claim 8,
wherein the first sensing element (16) and the second sensing element (24) are communicatively connected to the data processing apparatus (32), and
wherein the data processing apparatus (32) comprises a communication interface for providing the third data (D3) indicative of an incapacitation of the occupant (18) based on the first data (D1) and based on the second data (D2).

12. The system (44) according to claim 11, wherein the first sensing element (16) comprises a pressure sensor and/or a pressure sensing mat (14) arrangeable in or on a seat (12) of the vehicle (10).

13. The system (44) according to claim 11 or 12, further comprising a third sensing element (28) for generating at least a portion of the second data (D2) indicative of a position and/or orientation of at least one body part (52, 53, 54, 55) of the occupant (18) within the interior of the vehicle (10).

14. The system (44) according to any one of claims 11 to 13, wherein the second sensing element (24) and/or the third sensing element (28) comprises an optical camera (22), a radar unit (26) and/or a lidar unit configured to capture at least one of a torso (54), an arm (55), a leg (53), and a head (52) of the occupant (18).

15. A vehicle (10) comprising a system (44) according to any one of claims 11 to 14 for detecting an incapacitation of an occupant (18) of the vehicle (10).
